# EUROPEAN PATENT SPECIFICATION

(11) **EP 4 596 414 B1**
(45) Date of publication and mention of the grant of the patent: **18.11.2026**
(21) Application number: 25154862.4
(22) Date of filing: 30.01.2025
(51) Int. Cl.: B64D 27/33, B64D 33/10

(54) **AEROSPACE ELECTRIC PROPULSION THERMAL MANAGEMENT SYSTEM**
WÄRMEVERWALTUNGSSYSTEM FÜR ELEKTRISCHEN LUFTFAHRTANTRIEB
SYSTÈME DE GESTION THERMIQUE DE PROPULSION ÉLECTRIQUE AÉROSPATIALE

(30) Priority: 31.01.2024 SE 2450099
(43) Date of publication of application: 06.08.2025
(73) Proprietor: Heart Aerospace AB, 417 46 Göteborg (SE)
(72) Inventor: CARLSON, Nils, 428 33 Kållered (SE); CUENCA, Alain, 417 61 Göteborg (SE); HELLSING, Johan, 425 30 Hisings Kärra (SE); FRANSSON, Joel, 414 54 Göteborg (SE); MARTINS, Francisco, 417 49 Göteborg (SE)
(74) Representative: Murgitroyd & Company

(56) References cited:
- US-A1- 2018 050 811
- US-A1- 2020 010 208
- US-A1- 2022 250 756
- US-B1- 11 273 925

## Description

### TECHNICAL FIELD

The present disclosure relates to an aerospace electric propulsion thermal management system. The present disclosure also relates to an aircraft comprising at least one such system, to a method of cooling an electric motor and at least one motor control unit in such a system or aircraft, and to a computer program product.

### BACKGROUND

US2020381985A1 discloses a cooling system for an electric propulsion system (EPS). The cooling system includes a reservoir or tank filled with fluid, e.g., silicon or turbine oil, and one or more pumps. The cooling system includes a conduit, channel or pathway system that directs fluid to and through the electric motor and to and through all motor controllers, and returns to the reservoir or tank. The cooling system includes a heat exchanger, as shown in FIG. 4 of US2020381985A1. In an alternative embodiment in US2020381985A1, multiple independent cooling systems can also be included so that a cooling system used for electric motors is separate from the cooling system used for the motor controllers.

Another known system is disclosed in US11273925B1.

### SUMMARY

As realized by the present inventors, an effective cooling of an electric motor puts different requirements on the cooling medium or coolant than an effective cooling of one or more motor control units adapted to control the electric motor. This could call for separate cooling systems for the electric motor and the motor control unit(s), wherein both cooling systems could be air cooled by a heat exchanger. However, a problem with such a solution is that it could require the nacelle housing the cooling systems to be classified as a fire zone due to the amount of flammable fluid such as oil utilized to cool the electric motor. Moreover, such a solution may result in extensive tubing with two separate fluids. In addition, such a solution imposes greater aerodynamic inefficiencies with the use of more than one air cooled heat exchanger causing additional facial area exposed to the air flow resulting in drag.

An object of the present disclosure is to provide an improved aerospace electric propulsion thermal management system which seeks to mitigate, alleviate, or eliminate one or more of the above-identified deficiencies.

According to a first aspect of the present invention, this object is obtained by an aerospace electric propulsion thermal management system for an aircraft according to claim 1. The system comprises: an electric motor configured for propulsion of the aircraft; at least one motor control unit adapted to control the electric motor; a first fluid cooling circuit arranged to circulate a first fluid and comprising at least one first cooling channel in the at least one motor control unit; a first heat exchanger connected to the first fluid cooling circuit for providing cooling to the first fluid cooling circuit; a ram air inlet arranged to provide cooling to the first heat exchanger by ram air cooling; a second fluid cooling circuit arranged to circulate a second fluid and comprising at least one second cooling channel in the electric motor; and a second heat exchanger, wherein the first fluid cooling circuit is arranged to provide cooling (or heating) to the second fluid cooling circuit via the second heat exchanger.

The present invention is at least partly based on the understanding that by adding a second heat exchanger arranged such that the first fluid cooling circuit provides cooling to the second fluid cooling circuit (rather than the second fluid cooling circuit being directly cooled by an air cooled heat exchanger), the second fluid cooling circuit may contain less second fluid, such as oil, which in turn means that no fire detection or extinguishing equipment may be needed for the present system according to aviation regulations. Not needing fire detection and extinguishing equipment saves both weight and space, which is very beneficial in an aircraft, in particular an electric or hybrid electric aircraft. Moreover, the present system may have better aerodynamic properties for the aircraft, because an air/water heat exchange (the first fluid preferably comprises water) is more effective than an air/oil heat exchange would be.

The first heat exchanger may be arranged upstream of the at least one first cooling channel. The second heat exchanger may be arranged downstream of the at least one first cooling channel.

The first fluid cooling circuit may be a non-flammable fluid cooling circuit, for example a water cooling circuit. Accordingly, the first fluid may be a non-flammable fluid. The first fluid may, for example, comprise water.

The second fluid cooling circuit may be a dielectric fluid cooling circuit, for example an oil cooling circuit. Accordingly, the second fluid may be a dielectric fluid. The second fluid may, for example, be an oil.

The second heat exchanger may be positioned closer to the electric motor than the first heat exchanger.

The second fluid cooling circuit may have a length that is not more than 70%, preferably not more than 50%, of the length of the first fluid cooling circuit.

The second fluid cooling circuit may be sized to contain less than 10 liters, preferably less than 1 liter, of the second fluid.

The at least one second channel may be provided inside or adjacent a stator winding of the electric motor. In this way, the electric motor may be effectively cooled, as inside the stator winding is where the majority of the heat is produced.

The at least one motor control unit may be a plurality of motor control units.

The plurality of motor control units may be fluidly connected in parallel in the first fluid cooling circuit.

The system may further comprise at least one orifice plate arranged in the first fluid cooling circuit before the plurality of motor control units, wherein the at least one orifice plate is configured such that a flow of the first fluid in the first cooling channel in each motor control unit is equal. In this way, the same amount of first fluid may pass through each motor control unit.

The system may further comprise a nacelle accommodating the electric motor, the at least one motor control unit, at least part of the first fluid cooling circuit, the first heat exchanger, the ram air inlet, the second fluid cooling circuit, and the second heat exchanger. Also the at least one orifice plate and/or the bypass (see below) may be accommodated in the nacelle.

The system may further comprise a ram air inlet door, wherein the ram air inlet is arranged to provide cooling to the first heat exchanger by ram air cooling when the ram air inlet door is open. The ram air inlet door may beneficially be used to control how much cooling the ram air inlet provides to the first heat exchanger.

A portion of the first fluid cooling circuit downstream of the second heat exchanger and upstream of the first heat exchanger extends at least partly around said ram air inlet to provide heating to said ram air inlet. In this way, waste heat from the electric motor and/or the at least one motor control unit may beneficially be used to heat the said ram air inlet to prevent icing of the ram air inlet.

The first fluid cooling circuit may further comprise a bypass of the first heat exchanger. The bypass may be configured to be used when the electric motor is off to prevent that the temperature of the first fluid and/or the second fluid falls below a predetermined minimum temperature. The bypass may be configured to be used when the electric motor is on to regulate the temperature of the first fluid downstream of the first heat exchanger.

According to a second aspect of the present invention, there is provided an aircraft comprising at least one aerospace electric propulsion thermal management system according to the first aspect. The aircraft may for example be one or more of: an airplane, an electric propulsion aircraft, a hybrid electric propulsion aircraft, a fixed-wing aircraft, a conventional take-off and landing (CTOL) aircraft, a monoplane, and adapted to be flown by a pilot on board the aircraft. The aircraft may for example comprise one or more of: wings, braced wings, a fuselage, an empennage, a cockpit, a passenger cabin, flight control surfaces (such as ailerons, elevators, a rudder, flaps, air brakes, etc.), and a (wheeled and/or retractable) landing gear.

According to a third aspect of the present invention, there is provided a method of cooling the electric motor and the at least one motor control unit in a system according to the first aspect or in an aircraft according to the second aspect, wherein the method comprises: cooling the first heat exchanger by ram air cooling to cool (the) first fluid in the first fluid cooling circuit; providing the cooled first fluid through said at least one first cooling channel for cooling the at least one motor control unit, whereby the first fluid becomes less cold; providing the less cold first fluid through the second heat exchanger to (the) cool second fluid in the second fluid cooling circuit; and providing the cooled second fluid through said at least one second cooling channel for cooling the electric motor.

According to a fourth aspect of the present invention, there is provided a computer program product comprising computer program code to perform, when executed on a computer of a system according to the first aspect, the steps of: controlling at least one first pump of the first fluid cooling circuit to circulate the first fluid for cooling the at least one motor control unit; controlling at least one second pump of the second fluid cooling circuit to circulate the second fluid for cooling the electric motor; and controlling at least one (i.e. only one or both) of: a ram air inlet door to regulate cooling to the first heat exchanger; and at least one bypass valve of a bypass of the first heat exchanger. The computer may be (included in) at least one control unit of the aerospace electric propulsion thermal management system.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Fig. 1 schematically illustrates a first embodiment of an aerospace electric propulsion thermal management system.
Fig. 2 is a flowchart of a method of cooling an electric motor and at least one motor control unit.
Fig. 3 schematically illustrates further embodiments of an aerospace electric propulsion thermal management system. It should be noted that the present system may feature only one of these embodiments, all of the embodiments, or any combination of the embodiments.
Fig. 4 is a top view of an aircraft comprising at least one (aerospace) electric propulsion thermal management system.

### DETAILED DESCRIPTION

Aspects of the present disclosure will be described more fully hereinafter with reference to the accompanying drawings. The system and/or method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

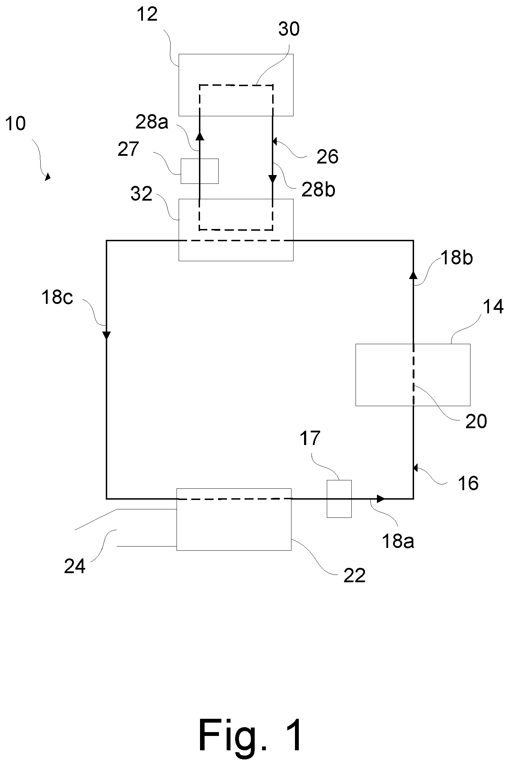

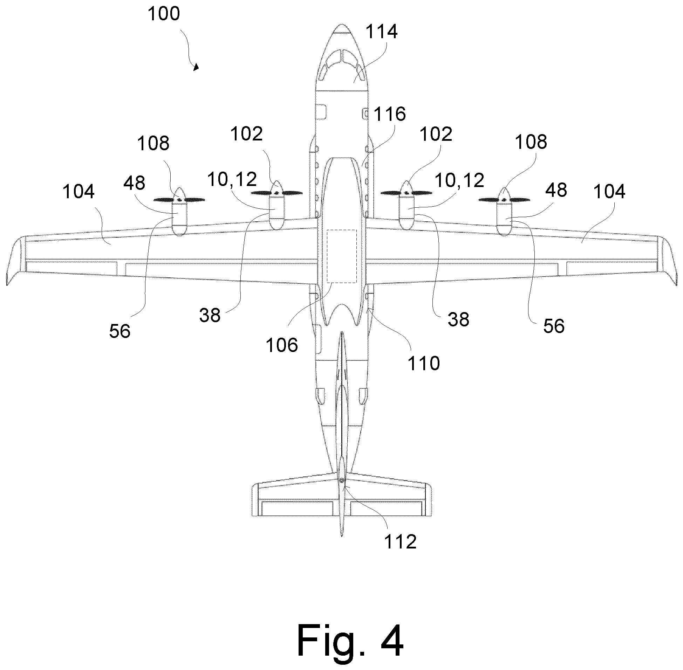

Fig. 1 shows a first embodiment of an aerospace electric propulsion thermal management system 10 for an aircraft 100 (see fig. 4). In the following, the aerospace electric propulsion thermal management system 10 is denoted system 10.

The system 10 comprises an electric motor 12. The electric motor 12 is configured for propulsion of the aircraft 100. To this end, the electric motor 12 may be coupled to a propeller 102 (see fig. 4).

The system 10 further comprises at least one motor control unit (MCU) 14. The at least one motor control unit 14 may be adapted to control the electric motor 10. Each motor control unit 14 may for example include power semiconductor switching devices, current and voltage measurement devices, control boards and related software as well as filter capacitors. The at least one motor control unit 14 may be electrically connected to the electric motor 10.

The system 10 further comprises a first fluid cooling circuit 16. The first fluid cooling circuit 16 may comprise at least one first pump 17 arranged to circulate a first fluid 18a-c inside the first fluid cooling circuit 16. Moreover, the first fluid cooling circuit 16 comprises at least one first cooling channel 20. The at least one first cooling channel 20 may be provided in the at least one motor control unit 14. Accordingly, the first fluid 18a-c may circulate through the at least one motor control unit 14 inside the at least one first cooling channel 20 to cool the at least one motor control unit 14. The first fluid 18a-c may be a coolant. The first fluid 18a-c may be a liquid. The first fluid 18a-c may be a non-flammable fluid. The first fluid 18a-c may for example comprise water, typically with an anti-freeze agent such as glycol added.

The system 10 further comprises a first heat exchanger 22. The first heat exchanger 22 is connected to the first fluid cooling circuit for providing cooling to (the first fluid in) the first fluid cooling circuit 16. The system 10 may further comprise a ram air inlet 24. The ram air inlet 24 is arranged to provide cooling to the first heat exchanger 22 by ram air cooling. Ram air may be defined as air (from) outside of the aircraft 100, preferably "freestream" air without any propeller effect on the airflow, in particular when the aircraft 100 is moving/flying. The first heat exchanger 22 may be arranged (connected) upstream of the at least one first cooling channel 20, as shown in fig. 1. The first heat exchanger 22 may be an air/water heat exchanger. The first heat exchanger 22 may be an air cooled heat exchanger.

The system 10 further comprises a second fluid cooling circuit 26. The second fluid cooling circuit 26 may comprise at least one second pump 27 arranged to circulate a second fluid 28a-b inside the second fluid cooling circuit 16. Moreover, the second fluid cooling circuit 26 comprises at least one second cooling channel 30. The at least one second cooling channel 30 may be provided in the electric motor 12. Accordingly, the second fluid 28a-b may circulate through the electric motor 12 inside the at least one second cooling channel 30 to cool the electric motor 12. The second fluid 28a-b may be a coolant. The second fluid 28a-b may be a liquid. The second fluid 28a-b may be a dielectric fluid. The second fluid 28a-b may for example be an oil, such as an inorganic oil. The second fluid 28a-b may for example be an oil of type MIL-PRF-7808 Grade 3.

The system 10 further comprises a second heat exchanger 32, wherein (the first fluid in) the first fluid cooling circuit 16 is arranged to provide cooling to (the second fluid in) the second fluid cooling circuit 30 via the second heat exchanger 32. The second heat exchanger 32 may be connected to the first fluid cooling circuit 16 and to the second fluid cooling circuit 26. Specifically, the second heat exchanger 32 may be arranged (connected) downstream of the at least one first cooling channel 20 in the at least one motor control unit 14, as shown in fig. 1. The second heat exchanger 32 may be a water/oil heat exchanger.

The second heat exchanger 32 may be positioned closer to the electric motor 12 than the first heat exchanger 22, as shown in fig. 1. The second heat exchanger 32 may for example be mounted onto a casing of the electric motor 12. Furthermore, the second fluid cooling circuit 26 may have a length that is not more than 70%, preferably not more than 50%, of the length of the first fluid cooling circuit 16. Furthermore, the second fluid cooling circuit 26 may be sized to contain less than 10 liters, preferably less than 1 liter, of the second fluid 28a-b.

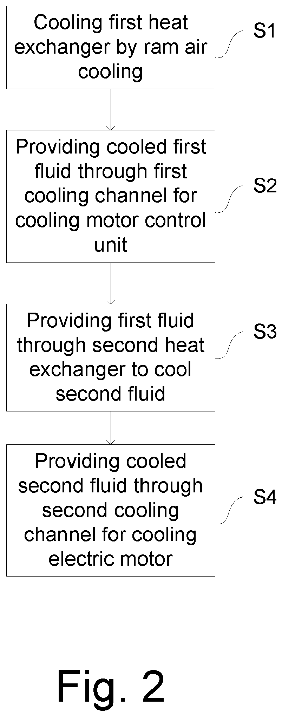

Exemplary operation of the system 10 will now be described with further reference to fig. 2. Operation of the system 10 may correspond to a method of cooling the electric motor 12 and the at least one motor control unit 14 according to the second aspect of the present invention. The method may for example be performed when the electric motor 12 and the at least one motor control unit 14 are on/operational (and thus generate heat) and the aircraft 100 is moving and/or flying.

At S1, the method may comprise cooling the first heat exchanger 22 by ram air cooling to cool the first fluid in the first fluid cooling circuit 16. The first heat exchanger 22 may be cooled by allowing ram air to enter into the first heat exchanger 22. This is achieved in one example by opening ram air inlet door 40.

The method may further comprise providing (step S2) the cooled first fluid 18a through the at least one first cooling channel 20, e.g. by means of the aforementioned at least one first pump 17, for cooling the at least one motor control unit 14, whereby the first fluid becomes less cold (i.e. gets an increased temperature) when heat is transferred from the at least one motor control unit 14 to the first fluid.

The method may further comprise providing (step S3) the less cold first fluid 18b through the second heat exchanger 32, also by means of the at least one first pump 17, to cool the second fluid in the second fluid cooling circuit 26.

The method may further comprise providing (step S4) the cooled second coolant fluid 28a through the at least one second cooling channel 30, e.g. by means of the aforementioned at least one second pump 27, for cooling the electric motor 12. The resulting "hot" second fluid may then be further circulated to the second heat exchanger 32, as shown by reference sign 28b. And the resulting "hot" first fluid may be further circulated from the second heat exchanger 32 to the first heat exchanger 22, as shown by reference sign 18c.

Because of the second (water/oil) heat exchanger 32, the second fluid cooling circuit 26 may contain less second fluid/oil, which in turn means that no fire detection or extinguishing equipment may be needed for the system 10. Not needing fire detection and extinguishing equipment beneficially saves both weight and space.

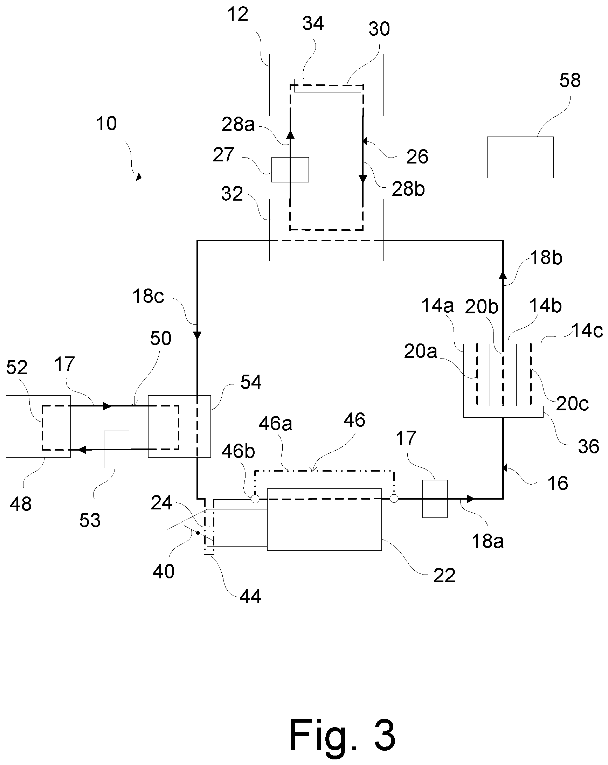

With further reference to fig. 3, the at least one second channel 30 may be provided inside, or directly adjacent to, a stator winding 34 of the electric motor 12. In this way, the electric motor 12 may be effectively cooled, as inside the stator winding 34 is where the majority of the heat is produced when the electric motor 12 is operating. Furthermore, the at least one motor control unit may be a plurality of motor control units 14a-c, for example three motor control units 14a-c. The plurality of motor control units 14a-c may be fluidly connected in parallel in the first fluid cooling circuit 16. Here the at least one first cooling channel may be a plurality of first cooling channels 20a-c, wherein each motor control unit 14a-c may have its own first cooling channels 20a-c.

The system 10 may further comprise at least one orifice plate 36. The at least one orifice plate 36 may be arranged in the first fluid cooling circuit 16 before the plurality of motor control units 14a-c. The at least one orifice plate 36 may be configured such that a flow of the first fluid in the first cooling channel 20a-c in each motor control unit 14a-c is equal. In other words, the flow of first fluid is equal (uniform) between the different motor control units 20a-c. The at least one orifice plate 36 may be a plurality orifice plates; one orifice plate 36 per first cooling channel 20a-c, wherein each orifice plate 36 may have a defined through hole (not shown).

The system 10 may further comprise a nacelle 38 (see fig. 4) accommodating the electric motor 12, the at least one motor control unit 14, part or all of the first fluid cooling circuit 16, the first heat exchanger 22, the ram air inlet 24, the second fluid cooling circuit 26, and the second heat exchanger 32. Also any orifice plate 36 and/or bypass 46 may be accommodated in the nacelle 38.

The system 10 may further comprise a ram air inlet door 40, wherein the ram air inlet 24 is arranged to provide cooling to the first heat exchanger 22 by ram air cooling when the ram air inlet door 40 is fully or partly open but not when the ram air inlet door 40 is closed.

A portion 44 of the first fluid cooling circuit 16 downstream of the second heat exchanger 32 and upstream of the first heat exchanger 22 extends at least partly around the ram air inlet 24 to provide heating to the ram air inlet 24, e.g. by the "hot" first fluid 18c. The portion 44 is illustrated by a dash dot line in fig. 3. Moreover, the aforementioned ram air inlet door 40 may be arranged in or at the ram air inlet 24.

The first fluid cooling circuit 16 may optionally comprise a bypass 46 of the first heat exchanger 22. The bypass 46 may for example comprise a bypass channel 46a, as illustrated by the dash dot dot line in fig. 3, and at least one bypass valve 46b At least part of the first fluid may be diverted through the bypass 46 when the electric motor 12 is off (and the aircraft 100 is flying), to prevent that the temperature of the first fluid and/or the second fluid falls below a predetermined minimum temperature. Furthermore, at least part of the first fluid may be diverted through the bypass 46 when the electric motor 12 is on, to manage (regulate) the temperature of the first fluid 18a downstream of the first heat exchanger 22.

The system 10 may optionally comprise a turbine engine 48 and a third fluid circuit 50. The turbine engine 48 may for example be (or at least form part of) a turboprop engine for propulsion of the aircraft 100. The third fluid circuit 50 is arranged to circulate a third fluid using a third pump 51, which regulates the flow in the third fluid circuit 50. The third fluid circuit 50 may comprise at least one channel 52 in the turbine engine 48. The third fluid circuit 50 may form part of a ("standard") cooling and/or lubrication system of the turbine engine 48. The third fluid may for example be an oil. Here, the first fluid cooling circuit 16 is arranged to provide heating to the third fluid circuit 50 via a third heat exchanger 54 of the system 10. The third heat exchanger 54 may be connected to the first fluid cooling circuit 16, preferably downstream of the second heat exchanger 32, and to the third fluid circuit 50. The first fluid cooling circuit 16 may for example be arranged to provide heating from the first fluid to the third fluid in the third fluid circuit 50 via the third heat exchanger 54 when the turbine engine 48 is off, the electric motor 12 is on, and the aircraft 100 is flying.

Moreover, the third fluid circuit 50 could be arranged to provide heating from the third fluid to the first fluid in the first fluid cooling circuit 16 via the third heat exchanger 54 when the turbine engine 48 is on, the electric motor 12 is off, and the aircraft 100 is flying. Here, the first fluid cooling circuit 16 may be arranged to provide heating to the second fluid in the second fluid cooling circuit 26 via the second heat exchanger 32, for heating the electric motor 12.

The system 10 may optionally comprise a turboprop nacelle 56. The turboprop nacelle 56 may accommodate the third fluid circuit 50, at least part of the turbine (turboprop) engine 48, and the third heat exchanger 54. The first fluid cooling circuit 16 preferably extends (from nacelle 38) to the turboprop nacelle 56.

The system 10 may further comprise at least one (system) control unit 58. The at least one control unit 58 may comprise hardware (such as at least one processor) and software. The at least one control unit 58 may be configured to control one or more components of the system 10, such as the at least one first pump 17, the at least one second pump 27, the third pump 51, the air inlet door 40, and/or the at least one bypass valve 46b. The control by the at least one control unit 58 may be based on various inputs related to the system 10 and/or aircraft 100, such as temperatures, operational states of components, operational modes of the aircraft, etc. For example, based on the input that the electric motor 12 and the at least one motor control unit 14 are on, the at least one control unit 58 may control the at least one first pump 17 and the at least one second pump 27 to circulate the first and second fluid, respectively, and (optionally) control the air inlet door 40 so that it is (at least partly) open. Based on the temperature of the electric motor 12 and the at least one motor control unit 14 as input, the at least one control unit 58 may (also) control the at least one bypass valve 46b, to manage/regulate the temperature of the first fluid 18a.

Moreover, the at least one second pump 27 could be used to pump the second fluid 28a-b (oil) also for lubrication of the electric motor 12, in particular lubrication of bearings and gears of the electric motor 12. That is, the second fluid/oil 28a-b may be used for both cooling and lubrication of the electric motor 12. Alternatively, a separate (electrical motor) lubrication system with its own pump can be used.

Turning to fig. 4, the system 10 may be installed in aircraft 100. The aircraft 100 may for example comprise two systems 10, one left system and one right system. In each system 10, the electric motor 12 may be coupled to a propeller 102. The nacelles 38 accommodating i.a. the electric motors 12 may for example be mounted to (main) wings 104 of the aircraft 100. Each electric motor 12 may be powered by one or more propulsion battery units 106 of the aircraft 100.

The aircraft 100 could optionally comprise two turboprop engines 48, e.g. one left turboprop engine and one right turboprop engine. Each turboprop engine 48 may be coupled to a propeller 108. The nacelles 56 accommodating i.a. the turboprop engine 48 may for example be mounted to the wings 104, preferably outboard of the electric motors 12. The turboprop engines 48 may be powered by aviation fuel. The turboprop engines 48 may form part of the systems 10, as in fig. 3. Alternatively, the turboprop engines of the aircraft 100 may be separate from the systems 10. Moreover, instead of turboprop engines, the aircraft 100 could optionally comprise additional systems 10 with electrical motors 12, such as four systems 10/electrical motors 12. The aircraft 100 could also comprise an auxiliary power unit (not shown) e.g. for range extension.

The aircraft 100 may further comprise a fuselage 110, an empennage 112, a cockpit 114, a passenger cabin 116, flight control surfaces (such as ailerons, elevators, a rudder, flaps, air brakes, etc.), and a landing gear. The aircraft 100 may for example be an airplane of fixed wing type with electric or hybrid electric propulsion and designed for conventional take-off and landing.

It should be appreciated that a flowchart comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the broadest example embodiments. It should be appreciated that these operations need not be performed in order. Furthermore, it should be appreciated that not all of the operations need to be performed. The example operations may be performed in any order and in any combination.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

In the drawings and specification, there have been disclosed exemplary aspects of the disclosure. However, many variations and modifications can be made to these aspects without departing from the scope of the claims. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. An aerospace electric propulsion thermal management system (10) for an aircraft (100), wherein the system comprises:
an electric motor (12) configured for propulsion of the aircraft;
at least one motor control unit (14) adapted to control the electric motor;
a first fluid cooling circuit (16) arranged to circulate a first fluid (18a-c) and comprising at least one first cooling channel (20) in the at least one motor control unit;
a first heat exchanger (22) connected to the first fluid cooling circuit for providing cooling to the first fluid cooling circuit;
a ram air inlet (24) arranged to provide cooling to the first heat exchanger by ram air cooling;
a second fluid cooling circuit (26) arranged to circulate a second fluid (28a-b) and comprising at least one second cooling channel (30) in the electric motor; and
a second heat exchanger (32),
wherein the first fluid cooling circuit is arranged to provide cooling or heating to the second fluid cooling circuit via the second heat exchanger, **characterised in that** a portion (44) of the first fluid cooling circuit downstream of the second heat exchanger and upstream of the first heat exchanger extends at least partly around said ram air inlet to provide heating to said ram air inlet.

2. The system according to claim 1, wherein the first heat exchanger is arranged upstream of the at least one first cooling channel, and wherein the second heat exchanger is arranged downstream of the at least one first cooling channel.

3. The system according to claim 1 or 2, wherein the first fluid cooling circuit is a non-flammable fluid cooling circuit.

4. The system according to any one of the preceding claims, wherein the second fluid cooling circuit is a dielectric fluid cooling circuit.

5. The system according to any one of the preceding claims, wherein the second heat exchanger is positioned closer to the electric motor than the first heat exchanger.

6. The system according to any one of the preceding claims, wherein the second fluid cooling circuit has a length that is not more than 70%, preferably not more than 50%, of the length of the first fluid cooling circuit, and/or the second fluid cooling circuit is sized to contain less than 10 liters, preferably less than 1 liter, of the second fluid.

7. The system according to any one of the preceding claims, wherein the at least one second channel is provided inside or adjacent to a stator winding (34) of the electric motor.

8. The system according to any one of the preceding claims, wherein the at least one motor control unit is a plurality of motor control units (14a-c) fluidly connected in parallel in the first fluid cooling circuit, wherein the system further comprises at least one orifice plate (36) arranged in the first fluid cooling circuit before the plurality of motor control units, wherein the at least one orifice plate is configured such that a flow of the first fluid in the first cooling channel (20a-c) in each motor control unit (14a-c) is equal.

9. The system according to any one of the preceding claims, further comprising a nacelle (38) accommodating the electric motor, the at least one motor control unit, at least part of the first fluid cooling circuit, the first heat exchanger, the ram air inlet, the second fluid cooling circuit, and the second heat exchanger.

10. The system according to any one of the preceding claims, further comprising a ram air inlet door (40), wherein the ram air inlet is arranged to provide cooling to the first heat exchanger by ram air cooling when the ram air inlet door is open.

11. The system according to any one of the preceding claims, wherein the first fluid cooling circuit further comprises a bypass (46) of the first heat exchanger, which bypass is configured to be used when the electric motor is off to prevent that the temperature of the first fluid (18a-c) and/or the second fluid (28a-b) falls below a predetermined minimum temperature.

12. An aircraft (100) comprising at least one aerospace electric propulsion thermal management system (10) according to any one of the preceding claims.

13. A method of cooling the electric motor and the at least one motor control unit in an aerospace electric propulsion thermal management system according to any one of the claims 1 to 11 or in an aircraft according to claim 12, wherein the method comprises:
cooling the first heat exchanger by ram air cooling to cool first fluid in the first fluid cooling circuit;
providing the cooled first fluid (18a) through said at least one first cooling channel for cooling the at least one motor control unit, whereby the first fluid becomes less cold;
providing the less cold first fluid (18b) through the second heat exchanger to cool second fluid in the second fluid cooling circuit; and
providing the cooled second fluid (28a) through said at least one second cooling channel for cooling the electric motor.

14. A computer program product comprising computer program code to perform, when executed on a computer (58) of an aerospace electric propulsion thermal management system (10) according to claim 10 and/ or 11, and further including at least one first pump (17) of the first fluid cooling circuit (16), at least one second pump (27) of the second fluid cooling circuit (26), and at least one bypass valve (46b) of the bypass (46), the steps of:
controlling the at least one first pump (17) of the first fluid cooling circuit (16) to circulate the first fluid for cooling the at least one motor control unit (14);
controlling the at least one second pump (27) of the second fluid cooling circuit (26) to circulate the second fluid for cooling the electric motor (12); and
controlling at least one of:
- the ram air inlet door (40) to regulate cooling to the first heat exchanger (22); and
- the least one bypass valve (46b) of the bypass (46) of the first heat exchanger (22).

## Patentansprüche

1. Ein thermisches Managementsystem (10) zum elektrischen Antrieb für die Luft- und Raumfahrt für ein Flugzeug (100), wobei das System Folgendes beinhaltet:
einen Elektromotor (12), der zum Antrieb des Flugzeugs konfiguriert ist;
mindestens eine Motorsteuereinheit (14), die zum Steuern des Elektromotors ausgelegt ist;
einen ersten Fluidkühlkreislauf (16), der zum Zirkulieren eines ersten Fluids (18a-c) angeordnet ist und mindestens einen ersten Kühlkanal (20) in der mindestens einen Motorsteuereinheit beinhaltet;
einen ersten Wärmetauscher (22), der mit dem ersten Fluidkühlkreislauf zum Bereitstellen von Kühlung für den ersten Fluidkühlkreislauf verbunden ist;
einen Staudrucklufteinlass (24), der zum Bereitstellen von Kühlung für den ersten Wärmetauscher durch Staudruckluftkühlung angeordnet ist;
einen zweiten Fluidkühlkreislauf (26), der zum Zirkulieren eines zweiten Fluids (28a-b) angeordnet ist und mindestens einen zweiten Kühlkanal (30) in dem Elektromotor beinhaltet; und
einen zweiten Wärmetauscher (32),
wobei der erste Fluidkühlkreislauf zum Bereitstellen von Kühlung oder Erwärmung für den zweiten Fluidkühlkreislauf über den zweiten Wärmetauscher angeordnet ist,
**dadurch gekennzeichnet, dass** sich ein Abschnitt (44) des ersten Fluidkühlkreislaufs stromabwärts des zweiten Wärmetauschers und stromaufwärts des ersten Wärmetauschers mindestens teilweise um den Staudrucklufteinlass erstreckt, um Erwärmung für den Staudrucklufteinlass bereitzustellen.

2. System gemäß Anspruch 1, wobei der erste Wärmetauscher stromaufwärts des mindestens einen ersten Kühlkanals angeordnet ist und wobei der zweite Wärmetauscher stromabwärts des mindestens einen ersten Kühlkanals angeordnet ist.

3. System gemäß Anspruch 1 oder 2, wobei der erste Fluidkühlkreislauf ein nicht entflammbarer Fluidkühlkreislauf ist.

4. System gemäß einem der vorhergehenden Ansprüche, wobei der zweite Fluidkühlkreislauf ein dielektrischer Fluidkühlkreislauf ist.

5. System gemäß einem der vorhergehenden Ansprüche, wobei der zweite Wärmetauscher näher an dem Elektromotor positioniert ist als der erste Wärmetauscher.

6. System gemäß einem der vorhergehenden Ansprüche, wobei der zweite Fluidkühlkreislauf eine Länge aufweist, die nicht mehr als 70 %, vorzugsweise nicht mehr als 50 %, der Länge des ersten Fluidkühlkreislaufs beträgt, und/oder der zweite Fluidkühlkreislauf so bemessen ist, dass er weniger als 10 Liter, vorzugsweise weniger als 1 Liter, des zweiten Fluids enthält.

7. System gemäß einem der vorhergehenden Ansprüche, wobei der mindestens eine zweite Kanal innerhalb oder benachbart zu einer Statorwicklung (34) des Elektromotors bereitgestellt ist.

8. System gemäß einem der vorhergehenden Ansprüche, wobei die mindestens eine Motorsteuereinheit eine Vielzahl von Motorsteuereinheiten (14a-c) ist, die in dem ersten Fluidkühlkreislauf fluidisch parallel geschaltet sind, wobei das System ferner mindestens eine Blendscheibe (36) beinhaltet, die in dem ersten Fluidkühlkreislauf vor der Vielzahl von Motorsteuereinheiten angeordnet ist, wobei die mindestens eine Blendscheibe so konfiguriert ist, dass eine Strömung des ersten Fluids in dem ersten Kühlkanal (20a-c) in jeder Motorsteuereinheit (14a-c) gleich ist.

9. System gemäß einem der vorhergehenden Ansprüche, ferner beinhaltend eine Gondel (38), die den Elektromotor, die mindestens eine Motorsteuereinheit, mindestens einen Teil des ersten Fluidkühlkreislaufs, den ersten Wärmetauscher, den Staudrucklufteinlass, den zweiten Fluidkühlkreislauf und den zweiten Wärmetauscher aufnimmt.

10. System gemäß einem der vorhergehenden Ansprüche, ferner beinhaltend eine Staudrucklufteinlassklappe (40), wobei der Staudrucklufteinlass zum Bereitstellen von Kühlung für den ersten Wärmetauscher durch Staudruckluftkühlung angeordnet ist, wenn die Staudrucklufteinlassklappe offen ist.

11. System gemäß einem der vorhergehenden Ansprüche, wobei der erste Fluidkühlkreislauf ferner eine Umgehungsleitung (46) des ersten Wärmetauschers beinhaltet, wobei die Umgehungsleitung zur Verwendung konfiguriert ist, wenn der Elektromotor ausgeschaltet ist, um zu verhindern, dass die Temperatur des ersten Fluids (18a-c) und/oder des zweiten Fluids (28a-b) unter eine vorbestimmte Mindesttemperatur fällt.

12. Ein Flugzeug (100), beinhaltend mindestens ein thermisches Managementsystem (10) zum elektrischen Antrieb für die Luft- und Raumfahrt gemäß einem der vorhergehenden Ansprüche.

13. Ein Verfahren zum Kühlen des Elektromotors und der mindestens einen Motorsteuereinheit in einem thermischen Managementsystem zum elektrischen Antrieb für die Luft- und Raumfahrt gemäß einem der Ansprüche 1 bis 11 oder in einem Flugzeug gemäß Anspruch 12, wobei das Verfahren Folgendes beinhaltet:
Kühlen des ersten Wärmetauschers durch Staudruckluftkühlung, um erstes Fluid in dem ersten Fluidkühlkreislauf zu kühlen;
Bereitstellen des gekühlten ersten Fluids (18a) durch den mindestens einen ersten Kühlkanal zum Kühlen der mindestens einen Motorsteuereinheit, wodurch das erste Fluid weniger kalt wird;
Bereitstellen des weniger kalten ersten Fluids (18b) durch den zweiten Wärmetauscher, um zweites Fluid in dem zweiten Fluidkühlkreislauf zu kühlen; und
Bereitstellen des gekühlten zweiten Fluids (28a) durch den mindestens einen zweiten Kühlkanal zum Kühlen des Elektromotors.

14. Ein Computerprogrammprodukt, beinhaltend Computerprogrammcode zum Durchführen, wenn er auf einem Computer (58) eines thermischen Managementsystems (10) zum elektrischen Antrieb für die Luft- und Raumfahrt gemäß Anspruch 10 und/oder 11 ausgeführt wird, und ferner umfassend mindestens eine erste Pumpe (17) des ersten Fluidkühlkreislaufs (16), mindestens eine zweite Pumpe (27) des zweiten Fluidkühlkreislaufs (26) und mindestens ein Umgehungsventil (46b) der Umgehungsleitung (46), der folgenden Schritte:
Steuern der mindestens einen ersten Pumpe (17) des ersten Fluidkühlkreislaufs (16), um das erste Fluid zum Kühlen der mindestens einen Motorsteuereinheit (14) zu zirkulieren;
Steuern der mindestens einen zweiten Pumpe (27) des zweiten Fluidkühlkreislaufs (26), um das zweite Fluid zum Kühlen des Elektromotors (12) zu zirkulieren; und Steuern von mindestens einem von:
- der Staudrucklufteinlassklappe (40), um Kühlung für den ersten Wärmetauscher (22) zu regulieren; und
- dem mindestens einen Umgehungsventil (46b) der Umgehungsleitung (46) des ersten Wärmetauschers (22).

## Revendications

1. Un système de gestion thermique de propulsion électrique aérospatiale (10) pour un aéronef (100), le système comprenant :
un moteur électrique (12) configuré pour la propulsion de l'aéronef ;
au moins une unité de commande de moteur (14) conçue pour commander le moteur électrique ;
un premier circuit de refroidissement de fluide (16) agencé pour faire circuler un premier fluide (18a-c) et comprenant au moins un premier canal de refroidissement (20) dans l'au moins une unité de commande de moteur ;
un premier échangeur de chaleur (22) raccordé au premier circuit de refroidissement de fluide pour fournir un refroidissement au premier circuit de refroidissement de fluide ;
une entrée d'air dynamique (24) agencée pour fournir un refroidissement au premier échangeur de chaleur par refroidissement à l'air dynamique ;
un deuxième circuit de refroidissement de fluide (26) agencé pour faire circuler un deuxième fluide (28a-b) et comprenant au moins un deuxième canal de refroidissement (30) dans le moteur électrique ; et
un deuxième échangeur de chaleur (32),
dans lequel le premier circuit de refroidissement de fluide est agencé pour fournir un refroidissement ou un chauffage au deuxième circuit de refroidissement de fluide par l'intermédiaire du deuxième échangeur de chaleur, **caractérisé en ce qu'**une portion (44) du premier circuit de refroidissement de fluide en aval du deuxième échangeur de chaleur et en amont du premier échangeur de chaleur s'étend au moins partiellement autour de ladite entrée d'air dynamique pour fournir un chauffage à ladite entrée d'air dynamique.

2. Le système selon la revendication 1, dans lequel le premier échangeur de chaleur est agencé en amont de l'au moins un premier canal de refroidissement, et dans lequel le deuxième échangeur de chaleur est agencé en aval de l'au moins un premier canal de refroidissement.

3. Le système selon la revendication 1 ou la revendication 2, dans lequel le premier circuit de refroidissement de fluide est un circuit de refroidissement de fluide non inflammable.

4. Le système selon l'une quelconque des revendications précédentes, dans lequel le deuxième circuit de refroidissement de fluide est un circuit de refroidissement de fluide diélectrique.

5. Le système selon l'une quelconque des revendications précédentes, dans lequel le deuxième échangeur de chaleur est positionné plus près du moteur électrique que le premier échangeur de chaleur.

6. Le système selon l'une quelconque des revendications précédentes, dans lequel le deuxième circuit de refroidissement de fluide a une longueur qui n'est pas supérieure à 70 %, de préférence pas supérieure à 50 %, de la longueur du premier circuit de refroidissement de fluide, et/ou le deuxième circuit de refroidissement de fluide est dimensionné pour contenir moins de 10 litres, de préférence moins de 1 litre, du deuxième fluide.

7. Le système selon l'une quelconque des revendications précédentes, dans lequel l'au moins un deuxième canal est prévu à l'intérieur de, ou adjacent à, un enroulement de stator (34) du moteur électrique.

8. Le système selon l'une quelconque des revendications précédentes, dans lequel l'au moins une unité de commande de moteur est une pluralité d'unités de commande de moteur (14a-c) raccordées de manière fluidique en parallèle dans le premier circuit de refroidissement de fluide, le système comprenant en outre au moins une plaque à orifice (36) agencée dans le premier circuit de refroidissement de fluide avant la pluralité d'unités de commande de moteur, l'au moins une plaque à orifice étant configurée de telle sorte qu'un écoulement du premier fluide dans le premier canal de refroidissement (20a-c) dans chaque unité de commande de moteur (14a-c) est égal.

9. Le système selon l'une quelconque des revendications précédentes, comprenant en outre une nacelle (38) logeant le moteur électrique, l'au moins une unité de commande de moteur, au moins une partie du premier circuit de refroidissement de fluide, le premier échangeur de chaleur, l'entrée d'air dynamique, le deuxième circuit de refroidissement de fluide, et le deuxième échangeur de chaleur.

10. Le système selon l'une quelconque des revendications précédentes, comprenant en outre une porte d'entrée d'air dynamique (40), l'entrée d'air dynamique étant agencée pour fournir un refroidissement au premier échangeur de chaleur par refroidissement à l'air dynamique lorsque la porte d'entrée d'air dynamique est ouverte.

11. Le système selon l'une quelconque des revendications précédentes, dans lequel le premier circuit de refroidissement de fluide comprend en outre une dérivation (46) du premier échangeur de chaleur, laquelle dérivation est configurée pour être utilisée lorsque le moteur électrique est arrêté pour empêcher que la température du premier fluide (18a-c) et/ou du deuxième fluide (28a-b) ne tombe en dessous d'une température minimale prédéterminée.

12. Un aéronef (100) comprenant au moins un système de gestion thermique de propulsion électrique aérospatiale (10) selon l'une quelconque des revendications précédentes.

13. Un procédé de refroidissement du moteur électrique et de l'au moins une unité de commande de moteur dans un système de gestion thermique de propulsion électrique aérospatiale selon l'une quelconque des revendications 1 à 11 ou dans un aéronef selon la revendication 12, le procédé comprenant :
le refroidissement du premier échangeur de chaleur par refroidissement à l'air dynamique pour refroidir un premier fluide dans le premier circuit de refroidissement de fluide ;
la fourniture du premier fluide refroidi (18a) à travers ledit au moins un premier canal de refroidissement pour refroidir l'au moins une unité de commande de moteur, moyennant quoi le premier fluide devient moins froid ;
la fourniture du premier fluide moins froid (18b) à travers le deuxième échangeur de chaleur pour refroidir un deuxième fluide dans le deuxième circuit de refroidissement de fluide ; et
la fourniture du deuxième fluide refroidi (28a) à travers ledit au moins un deuxième canal de refroidissement pour refroidir le moteur électrique.

14. Un produit de programme informatique comprenant un code de programme informatique pour réaliser, lorsqu'il est exécuté sur un ordinateur (58) d'un système de gestion thermique de propulsion électrique aérospatiale (10) selon la revendication 10 et/ou la revendication 11, et incluant en outre au moins une première pompe (17) du premier circuit de refroidissement de fluide (16), au moins une deuxième pompe (27) du deuxième circuit de refroidissement de fluide (26), et au moins un clapet de dérivation (46b) de la dérivation (46), les étapes de :
commande de l'au moins une première pompe (17) du premier circuit de refroidissement de fluide (16) pour faire circuler le premier fluide pour le refroidissement de l'au moins une unité de commande de moteur (14) ;
commande de l'au moins une deuxième pompe (27) du deuxième circuit de refroidissement de fluide (26) pour faire circuler le deuxième fluide pour le refroidissement du moteur électrique (12) ; et
commande d'au moins un élément parmi :
- la porte d'entrée d'air dynamique (40) pour réguler le refroidissement vers le premier échangeur de chaleur (22) ; et
- l'au moins un clapet de dérivation (46b) de la dérivation (46) du premier échangeur de chaleur (22).
